## Europäisches Patentamt

## European Patent Office

## Office européen des brevets

(19)

(11) Veröffentlichungsnummer: **0 267 633**
**B1**

(12) # EUROPÄISCHE PATENTSCHRIFT

(45) Veröffentlichungstag der Patentschrift:
07.03.90

(21) Anmeldenummer: 87201804.9

(22) Anmeldetag: 21.09.87

(51) Int. Cl.⁴: **B03C 1/00,** B03C 1/10,
B03B 9/06

(54) **Schrott-Trennverfahren.**

(30) Priorität: 14.11.86 DE 3639014

(43) Veröffentlichungstag der Anmeldung:
18.05.88 Patentblatt 88/20

(45) Bekanntmachung des Hinweises auf die Patenterteilung:
07.03.90 Patentblatt 90/10

(84) Benannte Vertragsstaaten:
AT BE CH DE ES FR GB GR IT LI LU NL SE

(56) Entgegenhaltungen:
DE-A- 2 427 828
DE-B- 1 033 604
US-A- 2 372 321
US-A- 3 582 001

(73) Patentinhaber: METALLGESELLSCHAFT AG,
Reuterweg 14 Postfach 3724, D-6000 Frankfurt/M.1(DE)

(72) Erfinder: Sattier, Hans-Peter, Dr., Ferdinandstrasse 22,
D-6380 Bad Homburg(DE)
Erfinder: Nichtweiss, Bernd, Praunheimer
Landstrasse 108, D-6000 Frankfurt am Main(DE)

(74) Vertreter: Rieger, Harald, Dr., Reuterweg 14,
D-6000 Frankfurt am Main(DE)

## Beschreibung

Die Erfindung bezieht sich auf ein Verfahren zum Abtrennen der Edelstahlanteile aus stückigem Shredderschrott, aus dem der ferromagnetische Anteil bereits abgetrennt ist.

Dem Recycling von Nutzstoffen aus Abfällen kommt unter ökologischen und ökonomischen Gesichtspunkten steigende Bedeutung zu. Bei Glas und Papier hat sich die getrennte Erfassung schon weitgehend durchgesetzt, so daß hier die Altmaterialien in erheblichem Umfang der Wiederverwertung zugeführt werden können. In manchen Bereichen werden auch schon Kunststoffe selektiv gesammelt und für eine weitere Nutzung wiederaufbereitet. Die Rückführung von Getränkedosen mit Hilfe von Sammelautomaten wird z.Zt. in Großversuchen getestet.

In allen genannten Beispielen wird das Recycling dadurch erleichtert, daß ein selektives Erfassen der Abfallstoffe relativ leicht möglich ist. Bei der weit überwiegenden Menge der Abfallstoffe ist es aber nicht der Fall. Die Wiederverwertung der darin enthaltenen Nutzstoffe ist nur möglich, wenn geeignete Trennverfahren zur Verfügung gestellt werden können. Als geeignet kann ein Verfahren oder eine Vorrichtung angesehen werden, wenn damit einzelne Komponenten oder Materialgruppen aus einem Abfallgemisch möglichst vollständig und möglichst rein abgetrennt werden können und wenn der Aufwand in einem akzeptablen Verhältnis zur Wertschöpfung steht.

In der Bundesrepublik Deutschland fallen jährlich etwa 2 Millionen Tonnen Schrott aus Shredder-Anlagen mit folgender Zusammensetzung an:

70 % ferromagnetische Metalle
10 % nicht-ferromagnetische Metalle
20 % Nichtmetalle.

Nach magnetischer Abtrennung der ferromagnetischen Metalle und Windsichtung erhält man ein Gemenge aus etwa 50 % metallischen 50 % nichtmetallischen Werkstoffen, das durch Sieben in eine Normalkorn- und in eine Unterkornfraktion aufgeteilt wird. Die Grenze wird je nach der vorgesehenen weiteren Aufbereitung zwischen 12 und 25 mm Siebkorngröße gewählt. Während die Normalkornfraktion für eine weitere Selektierung durch Vereinzelung und Analyse der einzelnen Stücke bzw. für eine Handverlesung geeignet ist, kommen solche Trennverfahren für die Unterkornfraktion mangels Wirtschaftlichkeit nicht in Betracht.

Die Unterkornfraktion enthält neben Gummi, Kunststoff, Glas, Steinen usw. noch etwa 30 % Metall, und zwar im Mittel 9 % Kupfer und Messing, 12 % Aluminium, 3 % Zink, 2 % Blei und 4 % Edelstahl. Unselektiert repräsentiert dieser Metallanteil einen Wert von DM 80,--/t, vollständig selektiert einen Wert von etwa DM 2.000,--/t.

Aus der Unterkornfraktion werden üblicherweise mittels nasser Trennverfahren (Sink/ Schwimmeinrichtungen oder Jigger) in einem ersten Durchlauf die organischen Bestandteile (Gummi, Kunststoff, Textilien) abgetrennt und in einem zweiten Durchlauf eine Aufteilung in Leicht- und Schwerfraktion vorgenommen. Die Leichtfraktion besteht zu etwa 30 % aus Aluminium; der Rest sind Steine, Glasbruch und Kunststoff, isolierte Kupferdrahtstücke. Sie muß auf Halde deponiert werden, weil es hierfür bisher kein wirtschaftliches Trennverfahren gibt. Die Schwerfraktion dagegen wird bisher noch ausschließlich im Trenn- Schmelzverfahren weiter aufbereitet. Man erhält Blei- und Zink-Gußblöcke mit Blei- und Zinkgehalten von etwa 90 % und als Rest ein Schrottgemenge aus Kupfer, Messing und Edelstahl. Für diesen etwa 60 % Kupfer und Messing enthaltenden Rest-Schrott wird ein um 450,-- bis 550,-- DM/t niedrigerer Preis gezahlt als für edelstahlfreien, im übrigen gleichen Schrott. Reiner Edelstahlschrott hat einen Preis von 1.000,-- DM/t. Bezogen auf eine Tonne Unterfraktion errechnet sich daraus ein Mehrerlös von DM 85,-- für den Fall, daß der Edelstahl aus dem Rest-Schrottgemenge abgetrennt werden kann. Weitere Vorteile können erzielt werden, wenn die Abtrennung der Edelstahlfraktion vor die Trennschmelze oder gar vor die Naß-Trennschritte gelegt wird.

Es besteht somit die Aufgabe, für das eingangs genannte Verfahren eine Methode anzugeben, mit der der Edelstahlanteil aus der Unterkornfraktion von Shredderschrott wirtschaftlich abgetrennt werden kann.

Überraschenderweise wurde gefunden, daß das möglich ist, wenn der Shredderschrott in eine Normalkornfraktion und eine Unterkornfraktion aufgeteilt wird, die Normalkornfraktion aus dem Verfahren ausgeschleust und einer gesonderten Aufbereitung zugeführt wird und wenn der Edelstahlanteil aus der Unterkornfraktion mittels Magnettrommel mit einer Feldstärke größer 0,2 Tesla abgetrennt wird.

Es hat sich nämlich herausgestellt, daß die an sich nicht ferromagnetischen Edelstahlanteile infolge der spanenden und spanlosen Umformung beim Shreddern in ausreichendem Maße ferromagnetisch werden, so daß eine Abtrennung mittels starker Magnete möglich ist. Dies gilt insbesondere für die Unterkornfraktion, d.h. für Edelstahlteilchen, bei denen während des Shreddervorgangs ein ausreichend großer Volumenanteil des austenitischen Gefüges in Martensit umgewandelt und damit eine so hohe Magnetisierbarkeit erreicht wird, daß eine magnetische Abtrennung von den übrigen Schrottteilen möglich ist.

In weiterer Ausbildung des Erfindungsgedankens ist vorgesehen, daß aus dem Shredderschrott - je nach vorgesehener Aufbereitung für die Normalkornfraktion - eine Unterkornfraktion mit einer Siebkorngröße kleiner 12 bis 25 mm abgetrennt wird. Ferner ist es zweckmäßig, wenn der abgetrennte, im wesentlichen Edelstahl enthaltende Anteil anschließend noch über eine Magnettrommel mit einer Feldstärke von etwa 0,07 Tesla geleitet wird. Damit werden ggfs. noch mitgeschleppte ferromagnetische Anteile abgetrennt, die üblicherweise außer dem Eisen eine Reihe von Begleitelementen aufweisen, die bei der Wiederverwendung des Edelstahlschrotts stören würden. Ggfs. kann auch so vorgegangen werden, daß der abgetrennte, im wesentlichen Edelstahl enthaltende Anteil in zwei Kornfraktionen mit einer Grenz-Siebkorngröße von 6 bis 8 mm aufgeteilt wird, daß der gröbere Anteil über eine Magnettrommel mit einer Feldstärke von etwa 0,07 Tesla und der feinere Anteil über eine Magnettrommel mit einer Feldstärke von etwa 0,03 Tesla geleitet wird.

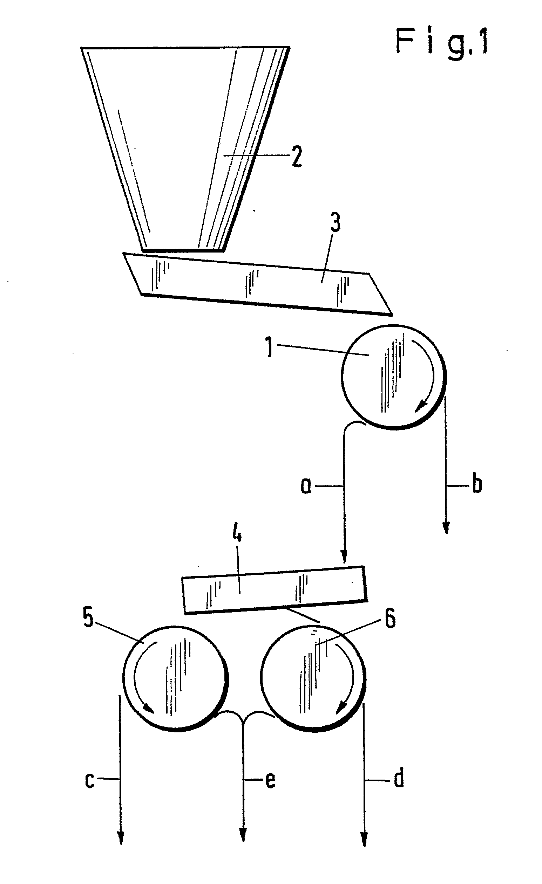

Weitere Einzelheiten werden anhand des in Figur 1 dargestellten Flußbildes erläutert.

Zur Durchführung des erfindungsgemäßen Verfahrens wird zweckmäßigerweise eine Vorrichtung benutzt, deren wichtigster Teil eine Magnettrommel (1) ist, die eine Feldstärke von mindestens 0,2 Tesla aufweist. Diese Magnettrommel wird aus einem Vorratsbehälter (2) über eine Förderstrecke (3) mit der Unterkornfraktion eines Schrottgemenges beaufschlagt, das im wesentlichen nur noch folgende Bestandteile enthält: Edelstahl, Zink, Kupfer, Messing und Blei. Daraus werden mittels der Magnettrommel (1) hoher Feldstärke die im Shreddervorgang hinreichend ferromagnetisch gewordenen Edelstahlanteile und ggfs. noch vorhandene Reste ferromagnetischer Teile abgetrennt. Während die Zink, Kupfer, Messing und Blei enthaltende Fraktion in bekannter Weise mittels Trennschmelzverfahren weiter selektiert wird, wird die im wesentlichen nur noch Edelstahl enthaltende Fraktion auf ein Sieb mit einer Siebkorngröße von etwa 7 mm geleitet und so in zwei Korngrößenfraktionen aufgeteilt. Anschließend wird der gröbere Anteil über eine Magnettrommel mit einer Feldstärke von etwa 0,07 Tesla und der feinere Anteil über eine Magnettrommel mit einer Feldstärke von etwa 0,03 Tesla geleitet. Auf diese Weise werden aus der im wesentlichen Edelstahl enthaltenden Fraktion ggfs. durch das gesamte Trennverfahren noch mitgeschleppte ferromagnetische Bestandteile abgeschieden, die bei einer Wiederverwertung des Edelstahlschrotts stören würden.

Mit dem erfindungsgemäßen Verfahren kann die selektive Aufbereitung von Shredderschrott wesentlich verbessert werden.

## Patentansprüche

1. Verfahren zum Abtrennen der Edelstahlanteile aus stückigem Shredderschrott, aus dem der ferromagnetische Anteil bereits abgetrennt ist, dadurch gekennzeichnet, daß der Shredderschrott in eine Normalkornfraktion und eine Unterkornfraktion aufgeteilt wird, daß die Normalkornfraktion aus dem Verfahren ausgeschleust und einer gesonderten Aufbereitung zugeführt wird und daß der Edelstahlanteil aus der Unterkornfraktion mittels Magnettrommel mit einer Feldstärke größer 0,2 Tesla abgetrennt wird.

2. Verfahren nach Anspruch 1, dadurch gekennzeichnet, daß aus dem Shredderschrott - je nach vorgesehener Aufbereitung für die Normalkornfraktion - eine Unterkornfraktion mit einer Siebkorngröße kleiner 12 bis 25 mm abgetrennt wird.

3. Verfahren nach Anspruch 1 oder 2, dadurch gekennzeichnet, daß der abgetrennte, im wesentlichen Edelstahl enthaltende Anteil anschließend noch über eine Magnettrommel mit einer Feldstärke von etwa 0,07 Tesla geleitet wird.

4. Verfahren nach Anspruch 3, dadurch gekennzeichnet, daß der abgetrennte, im wesentlichen Edelstahl enthaltende Anteil in zwei Kornfraktionen mit einer Grenz-Siebkorngröße von 6 bis 8 mm aufgeteilt wird, daß der gröbere Anteil über eine Magnettrommel mit einer Feldstärke von etwa 0,07 Tesla und der feinere Anteil über eine Magnettrommel mit einer Feldstärke von etwa 0,03 Tesla geleitet wird.

## Claims

1. Process for separating out the portions of high grade steel from shredder scrap in lump form, from which the ferromagnetic portion has already been separated, characterised in that the shredder scrap is divided into a normal grain fraction and an undersize fraction, that the normal grain fraction is removed from the process and is supplied for separate processing, and that the high-grade steel portion is separated from the undersize fraction by means of magnetic drums having a field intensity of greater than 0.2 Tesla.

2. Process according to Claim 1, characterised in that an undersize fraction having a sifted grain size of less than 12 to 25 mm is separated off from the shredder scrap, depending on the processing for which the normal grain fraction is intended.

3. Process according to Claim 1 or 2, characterised in that the separated portion containing largely highgrade steel is then passed over another magnetic drum having a field intensity of approximately 0.07 Tesla.

4. Process according to Claim 3, characterised in that the separated portion containing largely high-grade steel is divided into two grain fractions with a limit sifted grain size of 6 to 8 mm, that the coarser portion is passed over a magnetic drum having a field intensity of approximately 0.07 Tesla and the finer portion is passed over a magnetic drum having a field intensity of approximately 0.03 Tesla.

## Revendications

1. Procédé de séparation des fractions d'acier fin de ferraille en morceaux provenant d'un déchiquetage et dont la fraction ferromagnétique a déjà été séparée, caractérisé en ce qu'il consiste à subdiviser la ferraille provenant d'un déchiquetage en une fraction de granulométrie normale et en une fraction de granulométrie inférieure, à faire sortir la fraction de granulométrie normale du procédé et à l'envoyer à un traitement particulier, et à séparer la fraction d'acier fin de la fraction de granulométrie inférieure au moyen d'un tambour magnétique ayant une intensité de champ supérieure à 0,2 Tesla.

2. Procédé suivant la revendication 1, caractérisé en ce qu'il consiste à séparer de la ferraille provenant d'un déchiquetage, en fonction du traitement prévu pour la fraction de granulométrie normale, une fraction de granulométrie inférieure ayant une granulométrie inférieure à 12 à 25 mm.

3. Procédé suivant la revendication 1 ou 2, caractérisé en ce qu'il consiste à envoyer ensuite la fraction séparée contenant essentiellement de l'acier fin encore une fois sur un tambour magnétique ayant une intensité de champ de 0,07 Tesla environ.

4. Procédé suivant la revendication 3, caractérisé en ce qu'il consiste à subdiviser la fraction séparée contenant essentiellement de l'acier fin en deux fractions granulométriques ayant une granulométrie limite de 6 à 8 mm, et à envoyer la fraction la plus grossière sur un tambour magnétique ayant une intensité de champ de 0,07 Tesla environ et la fraction la plus fine sur un tambour magnétique ayant une intensité de champ de 0,03 Tesla environ.

EP 0 267 633 B1

F i g.1

2

3

1

a

b

4

5

6

c

e

d